# EUROPEAN PATENT APPLICATION

(11) **EP 3 780 728 A1**
(43) Date of publication of application: **17.02.2021**
(21) Application number: 19191759.0
(22) Date of filing: 14.08.2019
(51) Int. Cl.: H04W 36/00, H04W 36/14, H04W 74/08, H04W 72/12

(54) **TRANSCEIVER DEVICE AND BASE STATION**

(71) Applicant: Panasonic Intellectual Property Corporation of America, Torrance, CA 90503 (US)
(72) Inventor: SHAH, Rikin, 63225 Langen (DE); SUZUKI, Hidetoshi, Osaka-shi, Osaka 540-6207 (JP); TAO, Ming-Hung, 63225 Langen (DE)
(74) Representative: Grünecker Patent- und Rechtsanwälte PartG mbB

(57) **Abstract**

The present disclosure provides a transceiver device and a base station, and communication methods for a transceiver devices and a base station. The transceiver device comprises a transceiver, which in operation, receives a timing pattern indicator indicating a timing pattern including a first duration of a first period and a second duration of a second period; and circuitry, which in operation, sets first periods of the first duration and second periods of the second duration in an alternating manner according to the timing pattern, wherein the transceiver, in operation, performs communication with a first base station during the first periods, and performs communication with a second base station according to a random-access procedure during the second periods.

## Description

### FIELD OF THE PRESENT DISCLOSURE

The present disclosure relates to transmission and reception of signals in a communication system. In particular, the present disclosure relates to methods and apparatuses for such transmission and reception.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 15.0.0), at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing improved procedures for facilitating to save UE power, including procedures involving monitoring of a downlink control channel.

In an embodiment, the techniques disclosed herein feature a transceiver device comprising a transceiver, which in operation, receives a timing pattern indicator indicating a timing pattern including a first duration of a first period and a second duration of a second period. The transceiver device further comprises circuitry, which in operation, set first periods of the first duration and second periods of the second duration in an alternating manner according to the timing pattern. The transceiver, in operation, performs communication with a first base station during the first periods, and performs communication with a second base station according to a random-access procedure during the second periods.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

In the following, exemplary embodiments are described in more detail with reference to the attached figures and drawings.
- **Fig. 1**: shows an exemplary architecture for a 3GPP NR system;
- **Fig. 2**: shows an exemplary user and control plane architecture for the LTE eNB, gNB, and UE;
- **Fig. 3**: is a schematic drawing which shows functional split between NG-RAN and 5GC;
- **Fig. 4**: is a sequence diagram for RRC connection setup/reconfiguration procedures;
- **Fig. 5**: is a schematic drawing showing usage scenarios of Enhanced mobile broadband, Massive Machine Type Communications (mMTC) and Ultra Reliable and Low Latency Communications (URLLC);
- **Fig. 6**: is a block diagram which shows an exemplary 5G system architecture for a non-roaming scenario;
- **Fig. 7A**: illustrates a scenario of a non-terrestrial network, wherein a transmission between a terminal is performed via a remote radio unit including a satellite and an NTN gateway;
- **Fig. 7B**: illustrates a scenario of a non-terrestrial network, wherein a transmission between a terminal is performed via a satellite including a gNB as a scheduling device;
- **Fig. 8**: illustrates an exemplary message exchange between the UE, the serving gNB and a neighbour gNB as the possible target of a handover;
- **Fig. 9A**: illustrates a contention-based random access procedure;
- **Fig. 9B**: illustrates a contention-free random access procedure;
- **Fig. 10**: illustrates a general, simplified and exemplary block diagram of a user equipment and a scheduling device;
- **Fig. 11**: a method for a transceiver device in a handover process from a source base station to a target base station according to an embodiment;
- **Fig. 12**: illustrates an exemplary message exchange between a source base station and a target base station according to an embodiment;
- **Fig. 13**: illustrates an exemplary message exchange between a transceiver device, a source base station and a target base station according to an embodiment;
- **Fig. 14**: illustrates an exemplary message exchange between a source base station and a target base station according to an embodiment;
- **Fig. 15A**: illustrates a timing patter, wherein the duration of a first period A is longer than a second period B;
- **Fig. 15B**: illustrates a timing patter, wherein the duration of a first period A is shorter than a second period B;
- **Fig. 16**: a timing pattern with first periods A and second periods B, wherein the duration of said periods is decreased in order to account for a level of delay sensitivity of traffic;
- **Fig. 17**: illustrates timing patterns being applied separately for UL and DL transmissions with a temporal offset; and
- **Fig. 18**: illustrates a timing pattern being applied in parallel to a configured DRX cycle.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

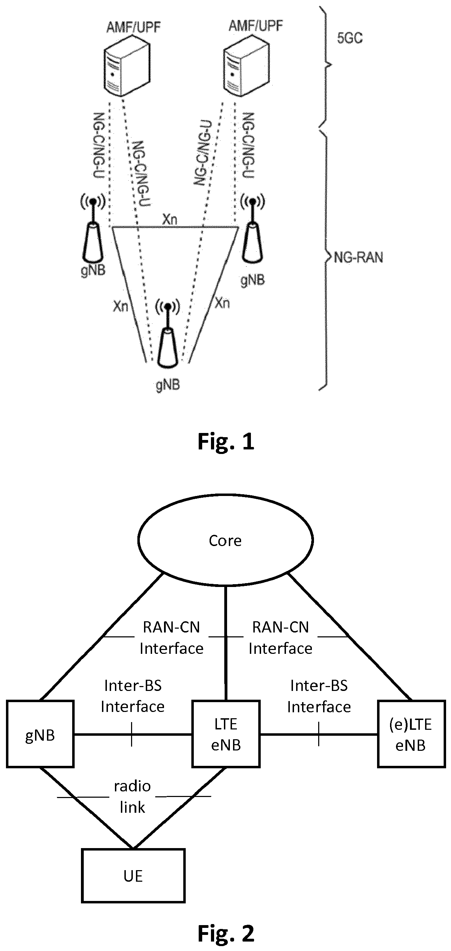

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

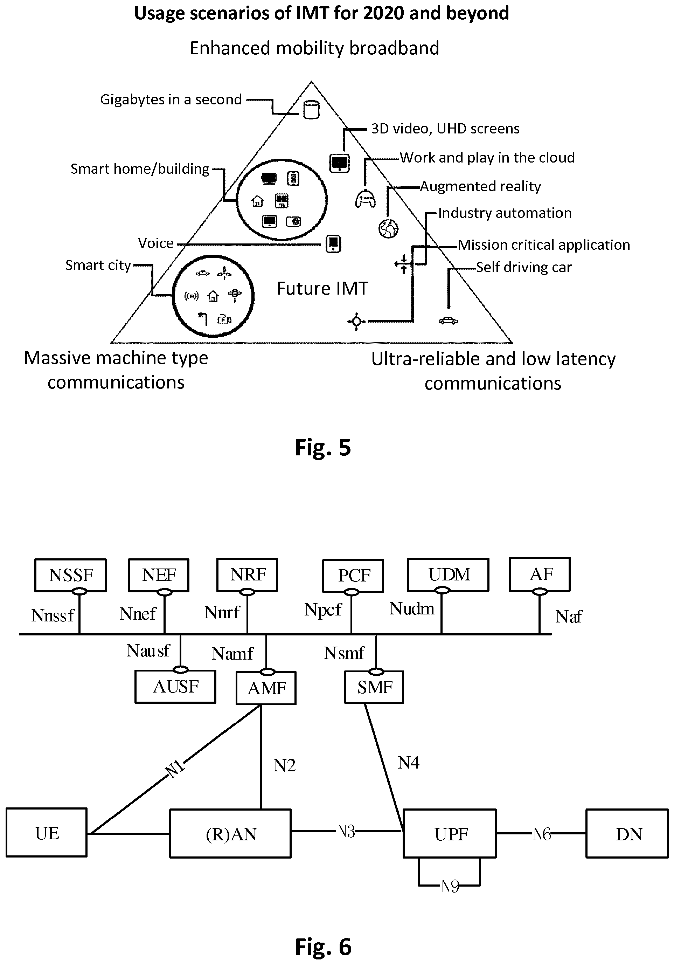

Various different deployment scenarios can be supported (see e.g. 3GPP TR 38.801 v14.0.0). For instance, a non-centralized deployment scenario (see e.g. section 5.2 of TR 38.801; a centralized deployment is illustrated in section 5.4) is presented therein, where base stations supporting the 5G NR can be deployed. Fig. 2 illustrates an exemplary non-centralized deployment scenario (see e.g. Figure 5.2.-1 of said TR 38.801), while additionally illustrating an LTE eNB as well as a user equipment (UE) that is connected to both a gNB and an LTE eNB. The new eNB for NR 5G may be exemplarily called gNB. An eLTE eNB is the evolution of an eNB that supports connectivity to the EPC (Evolved Packet Core) and the NGC (Next Generation Core).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. One physical channel is the PRACH (Physical Random Access Channel) used for the random access.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10-5 within 1ms). Finally, mMTC may preferably require high connection density (1,000,000 devices/km2 in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tu and the subcarrier spacing Δf are directly related through the formula Δf = 1 / Tu. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### 5G NR functional split between NG-RAN and 5GC

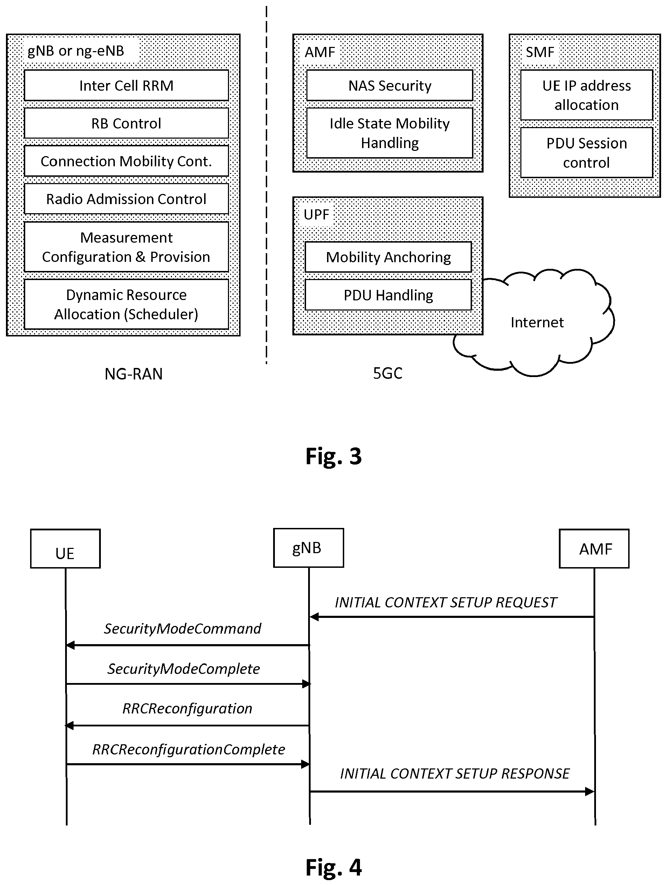

Fig. 3 illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

Fig. 4 illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

Fig. 5 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 5 illustrates some examples of envisioned usage scenarios for IMT for 2020 and beyond.

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From RAN1 perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLCC in Rel. 15 include Augmented Reality/Virtual Reality (AR/VR), e-health, e-safety, and mission-critical applications.

Moreover, technology enhancements targeted by NR URLCC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLCC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLCC, several technology enhancements from RAN1 perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 4. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

Fig. 6 illustrates a 5G NR non-roaming reference architecture (see TS 23.501 v16.1.0, section 4.23). An Application Function (AF), e.g. an external application server hosting 5G services exemplary described in Fig.5, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 6 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services.

A terminal is referred to in LTE and NR as a user equipment (UE). This may be a mobile device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay.

A base station is a network node, e.g. forming a part of the network for providing services to terminals. A base station is a network node, which provides wireless access to terminals. Communication between the terminal and the base station is typically standardized. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions.

Services for transfer of data provided by a layer to the higher layers are usually referred to as channels. For example, the LTE and the NR distinguish logical channels provided for higher layers by the MAC layer, transport channels provided by the physical layer to the MAC layer and physical channels which define mapping on the physical resources.

Logical channels are different kinds of data transfer services as offered by MAC. Each logical channel type is defined by what type of information is transferred. Logical channels are classified into two groups: Control Channels and Traffic Channels. Control channels are used for the transfer of control plane information only. Traffic channels are used for the transfer of user plane information only.

### Discontinuous reception - DRX

Packet-data is often highly bursty, with occasional periods of silence. From a delay perspective, it is beneficial to monitor the downlink control signaling permanently to receive uplink grants or downlink data transmissions and instantaneously react on changes in the traffic behavior. At the same time this comes at a cost in terms of power consumption at the device. To reduce the device power consumption, LTE includes mechanisms for discontinuous reception (DRX).

An exemplary implementation of the discontinued reception (DRX) function in 5G NR that involves PDCCH monitoring, according to the currently standardized version, will be explained in a simplified and abbreviated form in the following.

The basic mechanism for DRX is a configurable DRX cycle in the device. With a DRX cycle configured, the device monitors the downlink control signaling only in an active period per DRX cycle, sleeping with the receiver circuitry switched off in the remaining off period. This allows for a significant reduction in power consumption. Naturally, this implies restrictions to the scheduler as the device can be addressed only in the active periods.

To reduce the battery consumption in the UE, a mechanism to minimize the time the UE spends monitoring the PDCCH is used, which is called the Discontinuous Reception (DRX) functionality. DRX functionality can be configured for RRC_IDLE, in which case the UE uses either the specific or default DRX value (defaultPagingCycle); the default paging cycle is broadcasted in the System Information and can have values of 32, 64, 128 and 256 radio frames. The UE needs to wake up for one paging occasion per DRX cycle, the paging occasion being one subframe. DRX functionality can be also configured for an "RRC_CONNECTED" UE, so that it does not always need to monitor the downlink control channels for downlink control information (or phrased simply: the UE monitors the PDCCH) (see 3GPP Technical Standard TS 38.321 "NR; Medium Access Control (MAC) protocol specification", 15.6.0, chapter 5.7).

The following parameters are available to define the DRX UE behavior; e.g. the On-Duration periods at which the mobile node is active (i.e. in DRX Active Time), and the periods where the mobile node is in DRX (i.e. not in DRX Active Time).
- drx-onDurationTimer: the duration at the beginning of a DRX cycle;
- drx-SlotOffset: the delay before starting the drx-onDurationTimer;
- drx-InactivityTimer: the duration after the PDCCH occasion in which a PSCCH indicates a new UL or DL transmission for the MAY entitiy;
- drx-RetransmissionTimerDL (per DL HARQ process except for the broadcast process): the maximum duration until a DL retransmission is received;
- drx-RetransmissionTimerUL (per UL HARQ process): the maximum duration until a grant for UL retransmission is received;
- drx-LongCycleStartOffset: the Long DRX cycle and drx-StartOffset which defines the subframe where the Long and Short DRX Cycle starts;
- drx-ShortCycle (optional): the Short DRX cycle;
- drx-ShortCycleTimer (optional): the duration the UE shall follow the Short DRX cycle;
- drx-HARQ-RTT-TimerDL (per DL HARQ process except for the broadcast process): the minimum duration before a DL assignment for HARQ retransmission is expected by the MAC entity;
- drx-HARQ-RTT-TimerUL (per UL HARQ process): the minimum duration before a UL HARQ retransmission grant is expected by the MAC entity.

The total duration that the UE is awake is called "Active time" or DRX Active Time. The Active Time e.g. includes the time while
- drx-onDurationTimer or drx-InactivityTimer or drx-RetransmissionTimerDL or drx-RetransmissionTimerUL or ra-ContentionResolutionTimer (as described in clause 5.1.5 of 3GPP TS38.321) is running; or
- a Scheduling Request is sent on PUCCH and is pending (as described in clause 5.4.4 of 3GPP TS38.321); or
- a PDCCH indicating a new transmission addressed to the C-RNTI of the MAC entity has not been received after successful reception of a Random Access Response for the Random Access Preamble not selected by the MAC entity among the contention-based Random Access Preamble (as described in clause 5.1.4 of 3GPP TS38.321).

The "DRX period" or "DRX off period" is the duration of downlink subframes during which a UE can skip reception of downlink channels for battery saving purposes, i.e. is not required to monitor the downlink channels. The operation of DRX gives the mobile terminal the opportunity to deactivate the radio circuits repeatedly (according to the currently active DRX cycle) in order to save power. Whether the UE indeed remains in DRX (i.e. is not active) during the DRX period may be decided by the UE; for example, the UE usually performs inter-frequency measurements which cannot be conducted during the On-Duration, and thus need to be performed at some other time, e.g. during the DRX off time.

To meet conflicting requirements, two DRX cycles - a short cycle and a long cycle - can be configured for each UE; the short DRX cycle is optional, i.e. only the long DRX cycle could be used. The transition between the short DRX cycle, the long DRX cycle and continuous reception is controlled either by a timer or by explicit commands from the gNB. In some sense, the short DRX cycle can be considered as a confirmation period in case a late packet arrives, before the UE enters the long DRX cycle. If data arrives at the gNB while the UE is in the short DRX cycle, the data is scheduled for transmission at the next on-duration time, and the UE then resumes continuous reception. On the other hand, if no data arrives at the gNB during the short DRX cycle, the UE enters the long DRX cycle, assuming that the packet activity is finished for the time being.

During the Active Time, the UE monitors the PDCCH, reports SRS (Sounding Reference Signal) as configured and reports CQI (Channel Quality Information)/PMI (Precoding Matrix Indicator)/RI (Rank Indicator)/PTI (Precoder Type Indication) on PUCCH. When UE is not in Active time, type-O-triggered SRS and CQI/PMI/RI/PTI on PUCCH may not be reported. If CQI masking is set up for the UE, the reporting of CQI/PMI/RI/PTI on PUCCH is limited to the On-Duration subframes.

DRX cycles may be configured in the NR downlink so that the UE, by periodically switching off of a receiver, does not have to decode the physical downlink control channel (PDCCH) or receive physical downlink shared channel (PDSCH) transmission in certain periods, as defined, for instance, in 3GPP TS 38.321 ("NR; Medium Access Control (MAC) protocol specification", version 15.6.0, section 5.7) for connected mode, and 3GPP TS 38.304 ("User Equipment (UE) procedures in Idle mode and RRC Inactive state", version 15.4.0, section 7.1) for idle or inactive state.

According to the 3GPP TS 38.321 v15.6.0 specification, when a DRX cycle is configured, the active time includes times where a drx-onDurationTimer, a drx-InactivityTimer, a drx-RetransmissionTimerDL, a drx-RetransmissionTimerUL or a ra-ContentionResolutionTimer is running, as described in section 5.1.5 of 3GPP TS 38.321.

The drx-onDurationTimer defines the duration at the beginning of a DRX cycle, whereas the drx-InactivityTimer specifies the duration after the PDCCH occasion in which a PDCCH indicates a new uplink (UL) or downlink (DL) transmission for the MAC entity. The drx-RetransmissionTimerDL and -UL define the maximum duration until a DL retransmission is received and the maximum duration until a grant for UL retransmission is received, respectively.

### Non-terrestrial networks (NTNs)

In 3GPP, NR-based operation in a non-terrestrial network (NTN) is studied and described (see e.g. 3GPP TR 38.811, Study on New Radio (NR) to support non-terrestrial networks, version 15.0.0, and 3GPP TR 38.821, Solutions for NR to support non-terrestrial networks, version 0.3.0).

Thanks to the wide service coverage capabilities and reduced vulnerability of space/airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability.

A non-terrestrial network refers to a network, or segment of networks using RF resources on board of a satellite, for instance. NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the Gateway Center space/airborne platform.

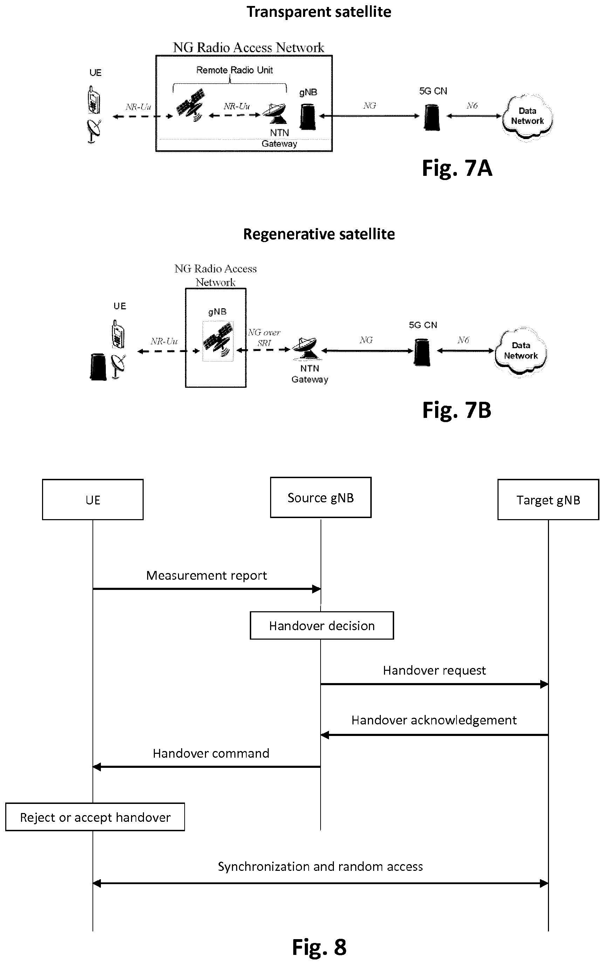

Fig. 7A illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. A satellite in this configuration is referred to as a transparent satellite.

Fig. 7B illustrates a scenario of a non-terrestrial network, wherein a transmission between a terminal (UE) is performed via a satellite including a gNB as a scheduling device. A satellite in this configuration is referred to as a regenerative satellite.

Every signal transmission based via electromagnetic waves is subject to a signal transmission delay due to the speed of light. In particular, twice the one-way propagation delay for a radio signal between a source and a destination is referred to as the round trip delay (RTD). A processing time at the processing node for a response signal to be generated may also be included in the RTD.

In particular, the round-trip delay depends on the distance between the source node, for instance, a terminal (UE), and a destination node. In NTNs, where signals are transmitted via a satellite or the like, the value of the RTD may be much larger than in terrestrial networks.

For instance, in a case of a signal being transmitted via a satellite in geostationary orbit, that is, at approximately 35786 km altitude, the RTD may be as large as 541.14 ms in a case where a scheduling devide, for instance, a gNB in NR, is located at a gateway, as illustrated in Fig. 7A.

The scenario illustrated in Fig. 7A is associated with a round-trip delay of 541.14 ms and the scenario illustrated in Fig. 7B is associated with a round-trip delay of 271.57 ms for a satellite in geostationary orbit. Similarly, the scenario illustrated in Fig. 7A for a satellite in low earth orbit (LEO), that is, at approximately 600 or 1200 km altitude, are associated with RTDs of 25.76 ms (600 km) or 41.75 ms (1200km). Further, the scenario illustrated in Fig. 7B for a satellite in low earth orbit (LEO), are associated with RTDs of 12.88 ms (600 km) or 20.87 ms (1200km).

The round trip delay values for the scenarios illustrated in Figs. 7A and 7B are summarized in table 1 for GEO and LEO orbits.

**Table 1: RTDs for transparent (transp.) and regenerative (reg.) satellites in GEO and LEO orbit**

| | **GEO** | | **LEO** | |
|---|---|---|---|---|
| Maximum RTD (Propagation delay only) | Scenario A | Scenario B | Scenario A | Scenario B |
| | (transp. satellite) | (reg. satellite) | (transp. satellite | (reg. satellite) |
| | 541.14 ms | 271.57 ms | 25.76 ms (600 lm) | 12.88 ms (600 km) |
| | | | 41.75 s (1200 km) | 20.87 ms (1200 km) |

### Reference signals

As in LTE, several different types of reference signals (RS) are used for 5G NR (see 3GPP TS 38.211 v15.4.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH,
- Tracking Reference Signal, usable for time tracking

Further, PBCH DMRS can be exemplarily seen as part of the SSB-reference signals (see 3GPP TS 38.215 v15.3.0 section 5.1.1 "SS reference signal received power (SS-RSRP)").

The main differences between reference signals in 5G NR communication systems and reference signals in LTE are that in 5G NR, there is no Cell-specific reference signal, that a new reference signal PTRS has been introduced for time/phase tracking, that DMRS has been introduced for both downlink and uplink channels, and that in NR, the reference signals are transmitted only when it is necessary.

As a DL-only signal, the CSI-RS, which the UE receives, is used to estimate the channel and report channel quality information back to the gNB. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

### UE measurements in 5G NR

An NR device can be configured to carry out different measurements, in some cases followed by a corresponding reporting of the results to the network.

In brief to provide the basic outline of measurements, the UE (NR device) can perform measurements e.g. based on reference signals (such as CSI-RS, SS Blocks) and obtains measurement results therefrom. These can be used by the UE internally or by other entities, such as the base station for mobility control, after having received some or all measurement results in a corresponding measurement report.

Measurement reports are exemplarily characterized by one or more of the following:
- Measurement reports include the measurement identity of the associated measurement configuration that triggered the reporting;
- Cell and beam measurement quantities to be included in measurement reports are configured by the network;
- The number of non-serving cells to be reported can be limited through configuration by the network;
- Cells belonging to a blacklist configured by the network are not used in event evaluation and reporting, and conversely when a whitelist is configured by the network, only the cells belonging to the whitelist are used in event evaluation and reporting;
- Beam measurements to be included in measurement reports are configured by the network (beam identifier only, measurement result and beam identifier, or no beam reporting).

Measurement reporting is defined in section 5.5.3 of 3GPP TS 38.331 v 15.3.0. The network may configure the UE to derive measurement results per cell. Measurement report triggering, including the different trigger events (see below overview), is defined in section 5.5.4 of 3GPP TS 38.331 v 15.4.0. Details on measurement reporting are provided in section 5.5.5 of 3GPP TS 38.331 v15.4.0.

Different events are defined, respectively including Leaving and Entering conditions, being associated with a time-to-trigger condition. This allows the UE to measure on its own and report the results according to the criteria defined for the events.

At least the following mechanisms are based on the measurement results obtained by the UE:
- handover decisions by the gNB based on the measurement results (received via measurement reports)
- triggering of measurement reporting
- radio link failure indication

### Handover process

Fig. 8 illustrates an exemplary message exchange between the UE, the serving gNB and a neighbour gNB as the possible target of a handover.

Handover decisions are typically taken by the serving gNB, assisted by the UE by providing measurement reports on the serving radio carrier and possibly other neighbouring radio carriers. Correspondingly, the first message illustrated in the message exchange diagram of Fig. 8 is the measurement report transmitted by the UE to its serving gNB.

Based on the received measurement report (and the measurement results included therein), the serving gNB can decide that a handover to another radio cell (e.g. another satellite) could be beneficial for the UE and thus starts a suitable handover procedure with a target gNB (neighbour gNB) and the UE.

The serving gNB prepares the handover in the target cell (see handover request and handover acknowledgment in Fig. 8) and transmits a handover command message to the UE. As exemplarily illustrated in Fig. 8, the handover procedure may be initiated by e.g. requesting the handover and awaiting the acknowledgement of the handover from the neighbour cell, e.g. so as to ascertain that the neighbour gNB has the capacity to accept a further UE and so as to allow the neighbour gNB to reserve resources for the UE to be handed over. After receiving the handover acknowledgement from the neighbour gNB, the serving gNB proceeds with the handover procedure and transmits a corresponding handover command message to the UE.

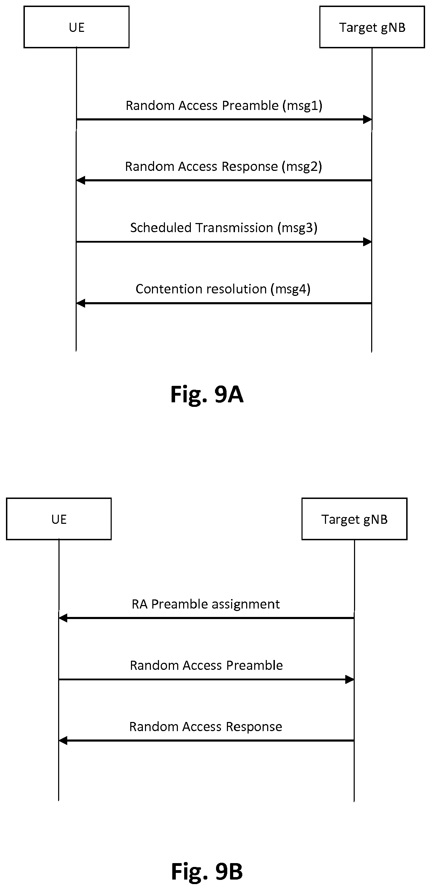

The handover command message may include the ID and additional information to identify and connect to the target cell. Furthermore, the handover command message includes one or more handover accept conditions and handover reject conditions. The handover accept condition is checked by the UE in order to determine whether and when to execute the handover. In case the handover accept condition is fulfilled, the UE executes the handover. On the other hand, the handover reject condition is checked by the UE in order to determine whether to reject the handover instruction. In case the handover reject condition is fulfilled, the UE immediately rejects the handover and may provide corresponding information on the rejection to its serving gNB (which could be used by the serving gNB to indicate to the target gNB to release any resources previously reserved for the UE handover). Fig. 8 illustrates the handover accept case, wherein synchronization and a random access procedure is performed, as detailed in the following with reference to Fig. 9A.

One specific and exemplary random access procedure that can be used for the present solutions will be explained in the following. Similar to LTE, 5G NR provides a RACH (Random Access Channel) procedure (or simply random access procedure) (see 3GPP TS 38.321, v15.3.0 section 5.1). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell if synchronization has been lost due to a too long period without any uplink transmission from the device;
- To request uplink scheduling if no dedicated scheduling request resource has been configured for the device.

### RACH procedure

Random access procedures are of two types, namely contention-based and contention-free RACH procedures. Contention-based random access may be applied when the UE is not yet synchronized or lost its synchronization. Contention-free random access is applied when the UE was previously synchronized to another gNB. Both procedures rely on transmission of a random access preamble from the UE to the gNB. The preamble is transmitted on specific time/frequency resources which are indicated by the gNB to UEs on control channels.

The contention-based RACH procedure will be described in the following in more detail, with reference to Fig. 9A.

A mobile terminal can be scheduled for uplink transmission, if its uplink transmission is time synchronized. The Random Access Channel (RACH) procedure plays a role as an interface between non-synchronized mobile terminals (UEs) and the orthogonal transmission of the uplink radio access. For instance, the Random Access is used to achieve uplink time synchronization for a user equipment which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

This procedure consists of four "steps". First, the user equipment transmits a random access preamble on the Physical Random Access Channel (PRACH) to the base station (i.e. message 1, msg1, of the RACH procedure). After the base station has detected a RACH preamble, it sends a Random Access Response (RAR) message (message 2, msg2, of the RACH procedure) on the PDSCH (Physical Downlink Shared Channel) addressed on the PDCCH with the (Random Access) RA-RNTI identifying the time-frequency and slot in which the preamble was detected. If multiple user equipment transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, since the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission (message 3, msg3) on the radio resources assigned by the grant within the random access response. This scheduled uplink transmission conveys the actual random access procedure message like for example an RRC Connection Request, RRC Resume Request or a buffer status report.

In case of a preamble collision having occurred in the first message of the RACH procedure, i.e. multiple user equipment have sent the same preamble on the same PRACH resource, the colliding user equipment will receive the same T-CRNTI within the random access response and will also collide in the same uplink resources when transmitting their scheduled transmission in the third step of the RACH procedure. In case the scheduled transmission from one user equipment is successfully decoded by base station, the contention remains unsolved for the other user equipment(s). For resolution of this type of contention, the base station sends a contention resolution message (a fourth message, msg4) addressed to the C-RNTI or Temporary C-RNTI. This concludes the procedure.

The contention-free RACH procedure will be described in the following in more detail, with reference to Fig. 9B.

In the contention-based random access procedure, the preamble is randomly chosen by the UE from a number of available preambles, with the result that more than one UE may transmit the same preamble simultaneously. Hence there is a need for signalling to resolve any contention. In the contention-free random access procedure, on the other hand, the gNB allocates a dedicated preamble to a UE, enabling contention-free access. This results in a faster procedure, which is particularly important for handover.

As illustrated in Fig. 9B, in a first step, the gNB transmits a Random Access (RA) Preamble Assignment, thereby assigning a dedicated preamble for the UE to perform the random access. As the dedicated preamble is different from those used in a contention-based procedure, possible collisions are avoided. Once the UE transmits the dedicated preamble in the first available RACH resource after receiving the command, it waits for a response in the form of a Random Access Response (RAR) message from the gNB. Once the RAR message is received, the UE checks whether the random access preamble identifier matches the preamble that was sent and, if so, it applies the timing advance and synchronizes with the gNB.

### Handover process with long RTD

Long RTD can result in a high handover failure rate, because the network makes handover decisions based on measurements that are already out-of-date and thus could be inaccurate. For instance, handover failures might include the handover-too-late case (other cases are e.g. the handover-to-wrong cell case). Furthermore, the long RTD in the message exchange also results in that the NTN handover takes a longer time, which might result in a longer service interruption for the UE during the handover from one NTN-network to another NTN-network.

Consequently, the inventors have identified the possibility to improve the measurement reporting and/or handover procedures so as to facilitate avoiding one or more of the above-discussed disadvantages. The improved measurement reporting and handover procedures can then be applied to scenarios such as the NTN scenarios where high latency is present. However, the NTN scenario is not the only scenario where the improved procedures can be implemented, but also other communication scenarios with a high RTD and/or rapid channel variation environment can benefit from the improved procedures, such as the NR Unlicensed scenario where the channel quality changes fast.

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

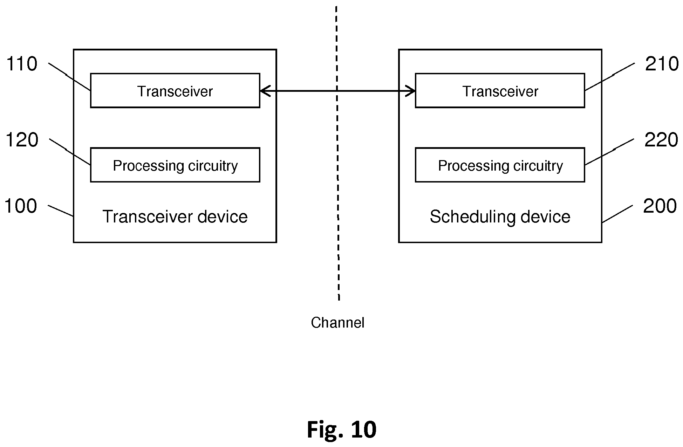

Fig. 10 illustrates a general, simplified and exemplary block diagram of a user equipment 100 (also termed communication device) and a scheduling device 200 (here exemplarily assumed to be located in the base station, e.g. the eLTE eNB (alternatively termed ng-eNB) or the gNB in 5G NR). The UE 100 and eNB/gNB 200 are communicating with each other over a (wireless) physical channel respectively using the transceiver 110, 210.

The transceiver device 100 and the scheduling device 200 may comprise a transceiver 110, 210 and processing circuitry 120, 220. The transceiver 110, 210 in turn may comprise and/or function as a receiver and a transmitter. The processing circuitry 120, 220 may be one or more pieces of hardware such as one or more processors or any LSIs. Between the transceiver 110, 210 and the processing circuitry 120, 220 there is an input/output point (or node), which is not illustrated in the figure, and over which the processing circuitry 120, 220, when in operation, can control the transceiver 110, 210, i.e. control the receiver and/or the transmitter and exchange reception/transmission data. The transceiver 110, 210, as the transmitter and receiver, may include the RF (radio frequency) front including one or more antennas, amplifiers, RF modulators/demodulators and the like. The processing circuitry 120, 220 may implement control tasks such as controlling the transceiver 110, 210 to transmit user data and control data provided by the processing circuitry and/or receive user data and control data, which is further processed by the processing circuitry 120, 220. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present disclosure provides techniques which may facilitate for an improved handover process of a transceiver device from first base station serving as a source base station and a second base station serving as a target base station.

The disclosure provides a transceiver device and a scheduling device as shown in Fig. 10.

The transceiver device 100 comprises a transceiver 110 (a transmitter and/or receiver comprising hardware component(s) such as one or more antennas and control circuitry which controls operation of the hardware component(s)), which, in operation, receives a timing pattern indicator indicating a timing pattern including a first duration of a first period and a second duration of a second period. Further, the transceiver device 100 comprises circuitry 120, which, in operation, sets first periods of the first duration and second periods of the second duration in an alternating manner according to the timing pattern, wherein the transceiver 110, in operation, performs communication with a first base station during the first periods, and performs communication with a second base station according to a random-access procedure during the second periods.

For instance, the transceiver device 100 is a UE in a NR network. Accordingly, the transceiver 110 and circuitry 120 are also referred to as "UE transceiver" and "UE circuitry". However, these terms are merely used to distinguish the transceiver 110 and the circuitry 120 from circuitry and transceiver(s) comprised by other devices such as a scheduling device 200 or a base station. The transceiver device 100 may be a terminal service, relay device, or communication device of a similar communication system.

Further provided is a base station 200 (or scheduling node) as shown in Fig. 10, which, for instance, serves as a source base station in a handover process for the transceiver device 100 to another base station serving as the target base station of the handover process.

The base station 200 comprises circuitry 220, which in operation, determines a timing pattern including a first duration of a first period and a second duration of a second period. Further, the base station comprises a transceiver 210, which in operation, transmits a timing pattern indicator indicating the timing pattern to a transceiver device 100, and performs communication with the transceiver device 100 during the first periods.

For instance, the base station 200 is a network node in a NR network system (a gNB) or in a similar communication system.

Further provided is a base station 200 (or scheduling node) as shown in Fig. 10, which, for instance, serves as a target base station in a handover process for the transceiver device 100 from another base station serving as the source base station of the handover process.

The base station 200 comprises circuitry 220, which, in operation, determines a timing pattern including a first duration of a first period and a second duration of a second period. Further, the base station comprises a transceiver 210, which in operation, transmits a timing pattern indicator indicating the timing pattern to a first base station, and performs communication with a transceiver device 100 according to a random-access procedure during the second periods.

For instance, the base station 200 is a network node in a NR network system (a gNB) or in a similar communication system.

Further provided is a method, comprising receiving a timing pattern indicator indicating a timing pattern including a first duration of a first period and a second duration of a second period. The method further comprises setting first periods of the first duration and second periods of the second duration in an alternating manner according to the timing pattern; and performing communication with a first base during the first periods and performing communication with a second base station according to a random-access procedure during the second periods.

That is, according to the present disclosure, a new active timing pattern with two periods, first period A and second period B, is provided to allow for transmissions between a transceiver device 100 and a source base station and between a transceiver device 100 and a target base station in a handover process in a parallel manner, wherein the transceiver device performs transmissions with the source base station only during the first period A, and the transceiver device 100 performs transmissions with the target base station only during the second period B.

As said first and second periods A and B have a fixed duration for a specific handover process, of which the transceiver device 100, the source base station and the target base station are aware of, collisions between source base station and target base station transmissions are prevented. A handover command message may be carried by an RRC Connection Reconfiguration Request, for instance.

For this purpose, the source base station transmits a handover message, for example, including the timing pattern, which is applied by the transceiver device 100.

During the handover process, for instance, a configured DRX cycle for communication between the transceiver device and the source base station may be either disabled or operated in parallel, as described in an embodiment further below.

In the further description, the details and embodiments apply to each of the transceiver device 100, the base stations 200 (or scheduling nodes) and the methods unless explicit statement or context indicates otherwise.

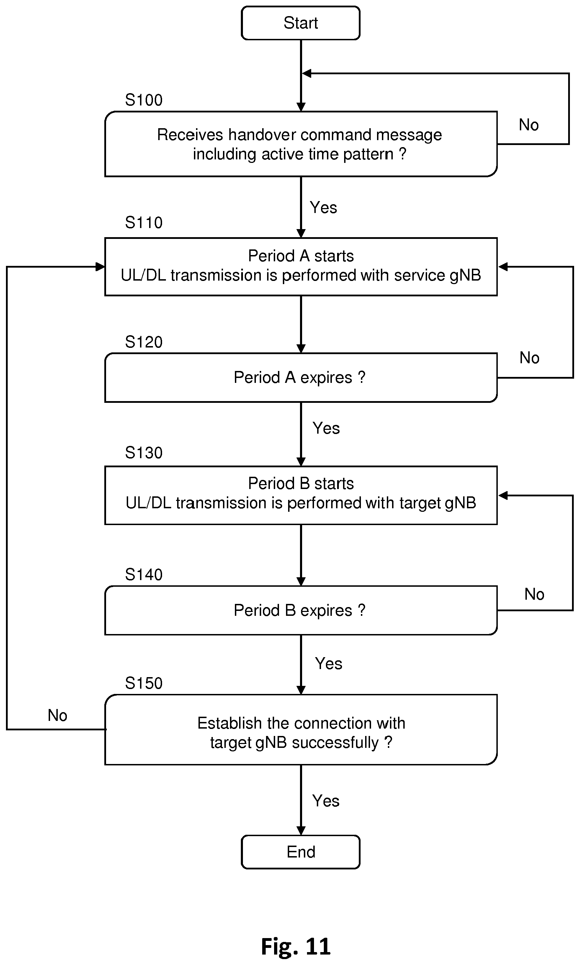

In the following, an embodiment of the present disclosure will be described with reference to Fig. 11, which illustrates a method for a UE (a transceiver device) 100 in a handover process from a source gNB (a source base station) to a target gNB (target base station).

In step S100, it is determined whether a handover command message which includes a timing pattern indicator is received from a source base station, which is also referred to a serving base station in a handover process. The timing pattern indicator indicates a duration value of a first period, period A, and a duration value of a second period, period B. In a case where it is determined that no such handover command is received from the serving base station (No in step S100), the method starts over again. In a case where a handover command message including a timing pattern indicator is received (Yes in step S100), the method continues to step S110.

In step S110, the first period, period A, is initiated. This may be achieved, for instance, by starting a timer with a runtime corresponding to the duration of the first period, period A, indicated by the timing pattern indicator. During period A, communication with the source gNB is performed and UL and/or downlink data may be transmitted between said devices.

In step S120 it is determined whether the time duration for period A has passed. For instance, it is determined whether the dedicated timer has expired. If it is determined that the dedicated timer has not expired (S110), the UE 100 continues performing communication with the source gNB. Note that the dedicated timer is not restarted. In a case where period A has passed, that is, the dedicated timer has expired (Yes in step S120) it is continued to step S130.

In step S130, the second period, period B, is initiated. This may be achieved, for instance, by starting a timer with a runtime corresponding to the duration of the second period, period B, indicated by the timing pattern indicator. During period B, communication with the target gNB is performed. For instance, messages according to a random access procedure as described above with reference to Fig. 9B may be exchanged in order to perform the registration process for successfully completing the handover process.

In step S120 it is determined whether the time duration for period A has passed. For instance, it is determined whether the dedicated timer has expired. If it is determined that the dedicated timer has not expired (S110), the transceiver device continues performing communication with the source gNB. Note that the dedicated timer is not restarted. In a case where period A has passed, that is, the dedicated timer has expired (Yes in step S120) it is continued to step S130.

In step S140, it is determined whether period B has expired. In other words, it is determined whether the indicated second duration has passed. For instance, it is determined whether the dedicated timer has expired. In a case where period B has not expired (No in step S140), the UE 100 continues performing communication with the target gNB as in step S130. In a case where period B has expired (Yes in step S140), it is continued to step S150.

In step S150, it is determined whether the connection with the target gNB has been successfully established. That is, it is determined whether the RACH procedure for registration at target gNB and, therefore, successful the handover procedure has been successfully completed. In a case where it is determined that the connection with target gNB has not yet been established successfully (No in step S150), it is continued to step S110, where period A is again initiated for communication with the source gNB. In a case where the connection with the target gNB has been successfully established, the method terminates. For instance, communication may be performed with the target gNB.

In other words, according to the method described above, the UE 100 alternatingly sets time periods A and B with associated time durations and performs communication with the source gNB in periods A and with the target gNB in periods B. The time durations have been received from the source gNB, for instance, included in a handover command. During periods A, user data and/or control data messages are received from and/or transmitted to the source gNB and, during periods B, messages of a random access procedure are received from and transmitted to the target gNB.

With this approach, data communication may be continued in parallel to establishing a connection to a target gNB in a handover process. This is particularly advantageous in a case of a large RTD, as it occurs, for instance, in a NTN, wherein the source gNB and/or the target gNB is located upon a satellite or wherein data transmission between the UE 100 and the source and/or target gNB is performed via a satellite connection. However, the disclosed method is not limited to being applied in a handover process in a NTN, but may be applied in a ground based network as well.

Further, due to the defined first and second durations of the first and second periods (periods A and B), which are associated with communication of the UE 100 with the source gNB and the target gNB, respectively, the resources may be allocated in such a way that there is no collision between UL/DL data transmitted between the UE 100 and the source gNB and RACH messages transmitted between the UE 100 and the target gNB.

For example, the UE 100 may start the initial first period when the timing pattern indicator is received. In other words, the first period A may be started when the timing pattern is received by the UE.

Further, for example, when the random-access procedure has been successfully completed, the UE 100 may stop periods A and/or B and continue with communication with the target base station.

As described above, the first base station may serve as a source base station and the second base station may serve as a target base station in a handover process for the UE 100.

In the following, embodiments for determining and/or transmitting an indicator indicating the active timing pattern including the first duration of the first period and the second duration of the second period in the framework of a handover process from a source base station to a target base station are described with reference to Figs. 8 and 12 to 14.

As described above with reference to Fig. 8, certain messages are transmitted between UE 100, the source base station and the target base station in a handover process. In short, UE transmits a measurement report to the source gNB. Base thereon, the source gNB decides whether a handover is to be performed and transmits a handover request to the target gNB. The target gNB acknowledges the handover request and transmits a corresponding message to the source gNB, which, subsequently, transmits a handover command to the UE 100.

Each of said transmitted messages may include a timing pattern indicator indicating the durations of the first and second periods A and B, as it is described in the following embodiments. Examples of how the timing pattern indicator may be implemented in each one of said messages will be given further below.

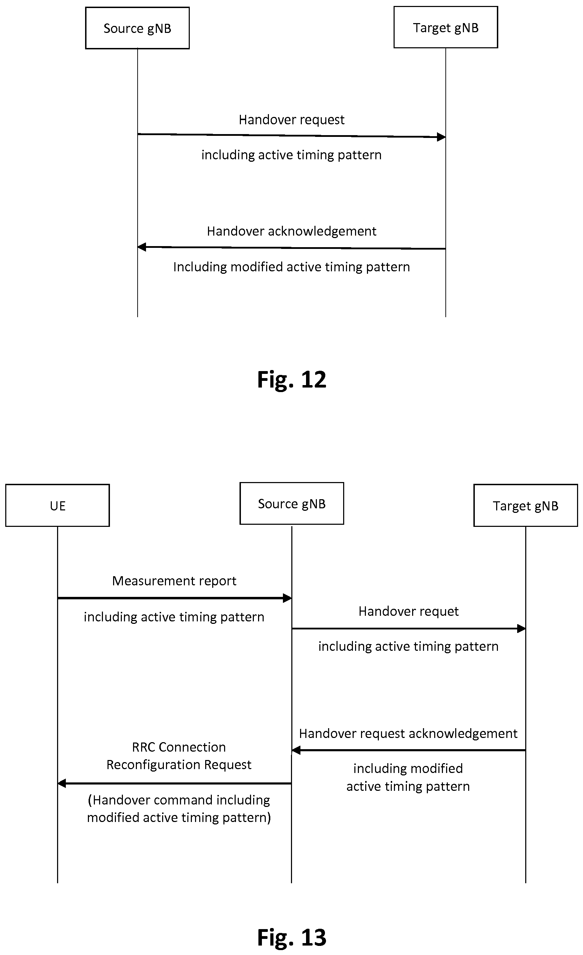

In an embodiment, which is illustrated in Fig. 12, the source gNB initiates the handover process with the handover request message, which is transmitted to the target gNB. The handover request message includes the timing pattern indicator. In other words, the handover request includes information about the active timing pattern. The handover request message may contain a HandoverPreparationInformation message. The information related to the active timing pattern may be a part of the handover request message or a part of the HandoverPreparationInformation message. The active timing pattern may be determined by the source gNB on the basis of scheduled data transmissions or, for instance, according to a DRX configuration for communication between the source gNB and the UE 100. For instance, the duration of the first period may be set so as to include the DRX-on period of the configured DRX cycle.

Further, after having received the handover request including the active timing pattern, the target gNB, modifies the received active timing pattern based on the scheduling information of the messages of a random access procedure. For instance, the durations of the first and the second periods may be adjusted so as to allow for communication between the UE 100 and the target gNB according to scheduling information of the messages illustrated in Fig. 9B.

Further, the target gNB transmits a timing pattern indicator indicating the modified timing pattern to the source gNB. For instance, the timing pattern indicator indicating the modified timing pattern is included in the handover acknowledgement message of the handover process. The handover request acknowledgement may further contain a handover command message.

Still further, the source gNB, after having received the modified timing pattern, may transmit the handover commend including information on the modified timing pattern to the UE 100, which, subsequently, performs the method described above with reference to Fig. 11, for instance. That is, communication with the source gNB is performed during first periods of the first time duration and communication with the target gNB according to a random access procedure is performed in the second periods.

In other words, the source base station determines a first timing pattern and transmits a corresponding first timing pattern indicator to the target gNB. The target gNB modifies the first timing pattern resulting in a modified timing pattern, and transmits a corresponding second timing pattern indicator to the source gNB. The source gNB, further, received the second timing pattern indicator and determines the timing pattern to be used in the handover process accordingly. That is, the timing pattern is set according to the second timing pattern received from the target gNB. In other words, the timing pattern is equal to the second timing pattern. Further, the source gNB transmits a timing pattern indicator indicting the timing pattern including the first duration of the first period and the second duration of the second period to the UE 100. Subsequently, the source gNB performs communication with the UE 100 during the first periods and the target gNB performs communication with the UE according to a random-access procedure during the second periods.

According to the embodiment, the target gNB may configure the active timing period based on the preferences of the source gNB. In other words, the target gNB may modify a timing pattern proposed by the source gNB so as to comply with scheduling of messages msg1 to msg4.

In an embodiment, the UE 100 includes information on an active timing pattern in the measurement report transmitted to the source gNB. This is illustrates in Fig. 13.

The active timing pattern may be determined by the UE 100, for instance, according to a DRX configuration for communication between the source gNB and the UE 100. For instance, the duration of the first period may be set so as to include the DRX-on period of the configured DRX cycle. The UE 100 transmits a measurements report including information on the determined timing pattern to the source gNB.

Further, after having received the timing pattern information from the UE 100, the source gNB subsequently transmits the handover request message including said information on the timing pattern received from the UE 100 to the target gNB, which, in turn, may modify the received timing pattern as described in the embodiment above.

Further, the target gNB transmits the modified timing pattern to the source gNB in the handover request acknowledgment message. Subsequently, the source gNB transmits the modified timing pattern indicator to the UE 100 in the RRC Connection Reconfiguration Request, i.e., the handover command. Just as described above, the UE 100 may then perform the method described above with reference to Fig. 11, for instance.

In other words, the UE 100 determines a first timing pattern and transmits a first timing pattern indicator indicating said first timing pattern, including a duration of the first period and the duration of the second period, to the source gNB. The UE may determine the timing pattern based on observations from the source gNB and the target gNB during the measurement activity. In an example, the UE 100 may determine the timing pattern according to the periodicity of SSBs (Synchronization Signal Block) received from the target gNB. For instance, the duration of the second period B may be set larger if the periodicity of SSB is longer. Similarly, the duration of the second period B may be set smaller if the periodicity of SSB is shorter. Alternatively, the UE may determine the timing pattern randomly.

The source, gNB receives the first timing pattern indicator and transmits a second timing pattern indicator indicating the first timing pattern to the target gNB. The target gNB received the second timing pattern indicator and modifies the indicated first timing pattern to determine a modified timing pattern, which is subsequently transmitted in a third timing pattern indicator to the source gNB. The source gNB received the third timing indicator indicating the modified timing pattern, set a timing pattern according to the modified timing pattern and transmits a timing pattern indicator indicating said timing pattern to the UE.

Further, the UE 100 receives the timing pattern indicator indicating the timing pattern to be applied for the handover process from the source gNB. Subsequently, the source gNB performs communication with the UE 100 during the first periods and the target gNB performs communication with the UE according to a random-access procedure during the second periods.

Described in a simplified manner, the UE 100 determines a proposed timing pattern, which is passed through by the source gNB to the target gNB. Based thereon, the target gNB determines a modified timing pattern, which is passed through by the source gNB to the UE 100. The transmitted timing pattern indicators may be included in the measurement report, the handover request, the handover acknowledgement and the handover command, for instance.

That is, in this embodiment, the UE 100 includes a timing pattern when it sends a measurement report to the source gNB. Further, the source gNB forwards the timing pattern received from the UE 100 to the target gNB, which modifies the timing pattern and sends the modified timing pattern to the source gNB. The source gNB includes the modified timing pattern when it sends the handover command to the UE 100.

According to the embodiment, the target gNB may configure the active timing period based on the preferences of the UE 100. In other words, the target gNB may modify a timing pattern proposed by the UE so as to comply with scheduling of messages msg1 to msg4.

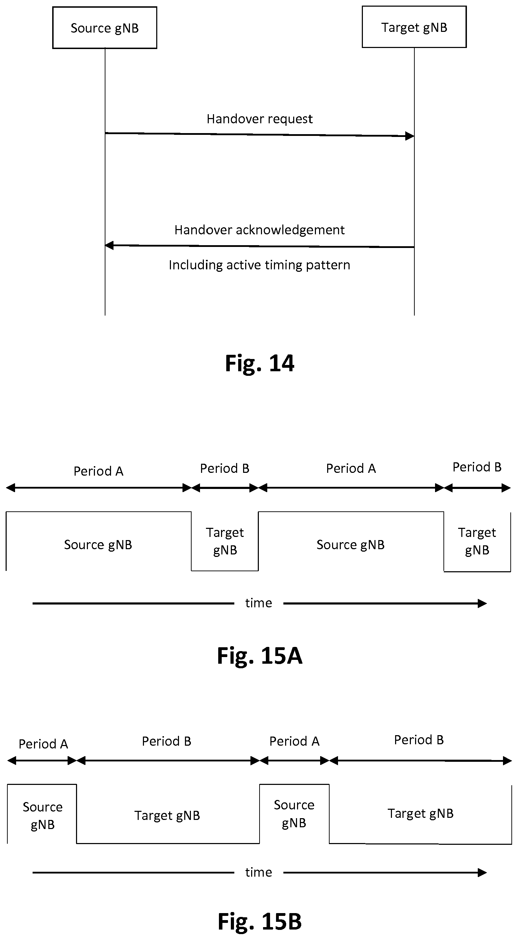

In an embodiment, which is illustrated in Fig. 14, a handover process as illustrated in Fig. 8 is performed, wherein the target gNB, after having received the handover request from the source gNB, responds back to the source gNB with a handover request acknowledgement including information about an active timing pattern. For this purpose, the target gNB determines an active timing pattern considering scheduling information of the messages for a RACH procedure to be carried out with the UE, for instance. The source gNB, after having received the handover acknowledgement message including the timing pattern, accepts the timing pattern and sets timing of UL/DL transmission for the UE 100 accordingly. Further, the source gNB transmits the handover request to the UE including information on the timing pattern.

In other words, the target gNB determines a timing pattern including a first duration of a first period and a second duration of a second period. Further, the target gNB transmits a timing pattern indicator indicating the timing pattern to the source gNB. The source gNB receives the timing pattern indicator including the timing pattern, and transmits a further timing pattern indicator indicating the received timing pattern to the UE. The UE, subsequently, receives the timing pattern indicator and performs the method described above with reference to Fig. 11, for instance. Subsequently, the source gNB performs communication with the UE 100 during the first periods and the target gNB performs communication with the UE according to a random-access procedure during the second periods.

According to the embodiment, the target gNB may configure the active timing period based on the scheduling of messages 1 to 4 of a RACH procedure. In comparison the other described embodiments, the data amount to be signaled is reduced, i.e. less signaling overhead is produced.

In the following, variations of the active timing pattern are described with reference to Figs. 15A to 18.

In a first variation, which is described with reference to Figs. 15A and 15B, the first duration and the second duration are different from each other.

Fig. 15A illustrates a case where the first duration, i.e. the duration of period A, is longer than the second duration, i.e. the duration of period B. As during period A, the UE 100 and the source gNB perform communication with each other, and in period B, the UE and the target gNB perform communication with each other according to a random-access procedure, more flexibility in scheduling transmissions is provided to the source gNB in this case. That is, the source gNB may schedule transmissions with the UE during periods A, which are longer than periods B. Further, the target gNB may schedule transmissions to/from the UE during the comparatively short periods B.

Fig. 15B illustrates a case where the first duration, i.e. the duration of period A, is shorter than the second duration, i.e. the duration of period B. As during period A, the UE 100 and the source gNB perform communication with each other, and in period B, the UE and the target gNB perform communication with each other according to a random-access procedure, more flexibility in scheduling transmissions is provided to the target gNB in this case. That is, the target gNB may schedule transmissions with the UE during periods B, which are longer than periods A. Further, the source gNB may schedule transmissions to/from the UE during the comparatively short periods A.

As described above with reference to Figs. 15A and 15B, the durations of periods A and B (first and second periods) differ from each other, so as to provide more flexibility of scheduling transmissions to either the source gNB or the target gNB.

For example, as described above, either the UE 100 or the source gNB may determine a timing pattern, which may be modified by the target gNB or the target gNB may determine a timing pattern, which will be applied in the handover process. That is, UE 100 or the source gNB may determine and propose a timing pattern to the target gNB. The timing pattern may be determined, for instance, according to scheduled data transmissions between UE 100 and the source gNB.

For instance, in a case where the amount of data to be transmitted between the UE 100 and the source gNB is rather large, either the UE 100 or the source gNB may determine a timing pattern with a first duration, which is longer to the second duration.

Alternatively, the UE 100 or the source gNB may determine a timing pattern with a first duration, which is shorter than the second duration, in a case where UL/DL transmission of data between the UE 100 and the source gNB is lower.

In other words, the UE or the source gNB may determine a level of flexibility required in data transmission between the UE and the source gNB and determine a timing pattern, i.e. a first duration of a first period and a second duration of a second period, according to the level of flexibility. For instance, the level of required flexibility may be determined according to an amount of data to be transmitted between the UE 100 and the source gNB.

Further, as described above, the target gNB may modify the received timing pattern according to scheduling of messages 1 to 4 of the RACH procedure.

Although in the described variation the first time and the second time differ from each other, the present disclosure is not limited thereto, and the first duration and the second duration may be equal to each other.

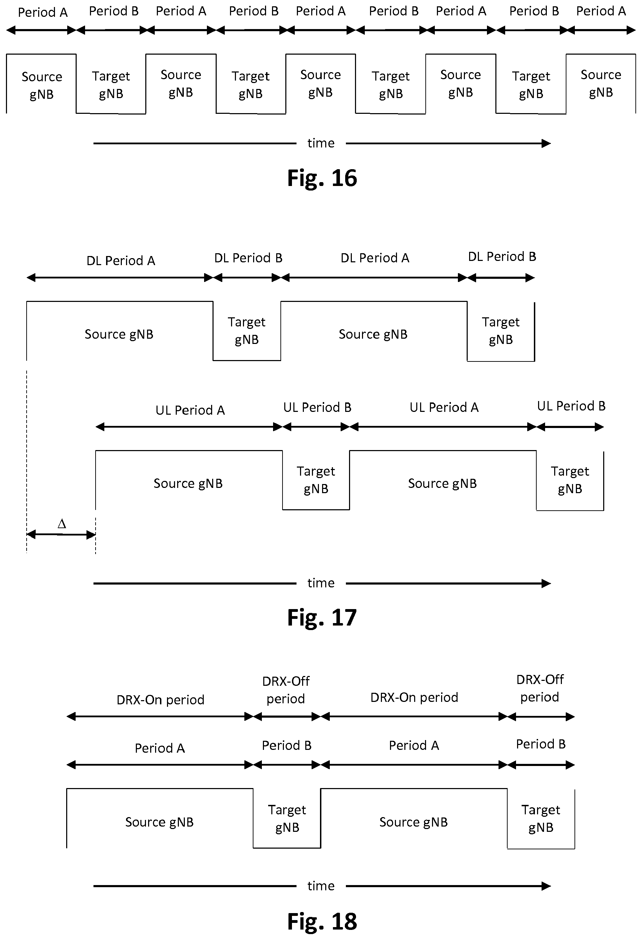

In a second variation, which is described in the following with reference to Fig. 16, the absolute value of the first and the second time durations may be set according to a level of delay sensitivity of data transmission.

Fig. 16 illustrates a timing pattern with first periods A and second periods B, wherein the duration of said periods is decreased in comparison to the duration of period A as illustrated in Fig. 15A and/or the duration of period B as illustrated in Fig. 15B.

As described above, UE 100 or the source gNB may propose a timing pattern to the target gNB, which subsequently may modify said timing period. Alternatively, the target gNB may determine the timing pattern to be used in the handover process.

The first duration of the first period and the second duration of the second period may be determined according to a level of delay sensitivity of data to be transmitted between the UE 100 and the source gNB or the target gNB.

For instance, the UE 100 or the source gNB may determine a level of delay sensitivity of data to be transmitted there between. Accordingly, the durations of the first period and the second period may be set. For instance, the first and second durations may be set to be shorter the higher the level of delay sensitivity of the data is.

In other words, a frequency of changing between first and second periods may be set higher in a case of a high level of delay sensitivity and lower in a case of a low level of delay sensitivity. This may be achieved by setting the absolute values of the first and the second duration to a larger or lower value.

By setting the durations of the first period A and the second period B according to a level of delay sensitivity of data transmissions, it can be ensured that, for instance, a delay may be kept below a certain threshold, as an interruption of a communication between the UE 100 and the source gNB due to the second period B and an interruption of a communication between the UE 100 and the target gNB may be kept short.

Although in the variation described above with reference to Fig. 16, the first and the second durations are of equal length, the present disclosure is limited thereto, and the first and second durations may differ from each other.

In a third variation, which is described in the following with reference to Fig. 17, an individual timing pattern is applied for downlink (DL) and uplink transmissions (UL). As shown in the figure, the timing pattern received by the UE 100 is applied to DL and uplink transmission with a temporal offset to each other. For example, the timing indicator may, further to the first duration of the first period A and the second duration of the second period B include an offset Δ, which defines a temporal offset for the timing pattern to be applied for UL and DL transmissions.

In the example illustrated in Fig. 17, the first periods A and second periods B for uplink transmissions are delayed with respect to the first periods A and the second periods B for DL transmissions by the temporal offset Δ transmitted together with the timing pattern.

During the first periods A for DL transmissions (DL period A), downlink communication between the UE 100 and the source gNB is performed. During the second periods B for DL transmissions (DL period B), downlink communication between the UE 100 and the target gNB is performed according to a random-access procedure.

Further, during the first periods A for UL transmissions (UL period A), uplink communication between the UE 100 and the source gNB is performed. During the second periods B for UL transmissions (UL period B), uplink communication between the UE 100 and the target gNB is performed according to the random-access procedure.

The DL period A may be started by the UE when the handover command is received. Further, when the handover command is received, a timer may be initiated with a runtime corresponding to the temporal offset value received in addition to the timing pattern, and the UL period A may be started when said timer has expired.

Applying timing patterns with a temporal offset between DL and UL transmissions may account for unsynchronized carriers for UL and DL transmissions, for example.

Although in Fig. 17, the UL periods are delayed with respect to the DL periods, the present disclosure is not limited thereto, and the DL periods may be delayed with respect to the UL periods.

A delay of the UL periods with respect to the DL periods may be indicated by a positive temporal offset value Δ, whereas a delay of the DL periods with respect to the UL periods may be indicated by a negative temporal offset value Δ. It goes without saying that a positive temporal offset value may also indicate a delay of the DL periods with respect to the UL periods, and a negative temporal offset value may indicate a delay of the UL periods with respect to the DL periods.

In a fourth variation, a DRX operation is applied for communication between the UE 100 and the source gNB in parallel with an active timing pattern for a handover process. This is illustrated in Fig. 18.

As described above, if a DRX cycle is configured for communication between the UE and a gNB, the UE monitors a physical downlink control channel in active times and does not monitor the PDCCH in OFF periods.

During a configured on-duration, the UE monitors the PDCCH and, after having received PDCCH transmission, the drx-InactivityTimer is started. Further, in a case where a transmission could not be decoded successfully, the drx-RetransmissionTimerUL or drx-RetransmissionTimerDL are initiated. While either one of said timers is running (among others, as described above), the UE 100 monitors the PDCCH. The period wherein the UE 100 is monitoring the PDCCH is referred to as DRX active time.

According to the variation, the first period A may be determined so as to include active times of a DRX cycle.

In other words, the DRX active times do not extend beyond the first periods A. That is, the drx-ON period included in period A may not be extended by the drx-InactivityTimer, the drx-RetransmissionTimerUL or drx-RetransmissionTimerDL such that the DRX active time overlaps with the second periods B.

For instance, in a case where a drx-Inactivitytimer or a drx-ReransmissionTimer is running when a second period B is started, the drx-InactivityTimer and/or drx-RetransmissionTimer may be terminated and restarted with respective remaining timing duration when the next first period A is started. In other words, the DRX active time according to a DRX configuration for communication of the UE 100 with the source gNB may be interrupted when the first period A expires and resumed when the subsequent second period B expires and a next first period A is started.

With this approach, a configured DRX configuration for communication between the UE 100 and the source gNB may be operated in parallel to the improved handover process without causing a possibility of collisions of data transmissions.

In an embodiment, the disclosed timing pattern sharing may be enabled in a NTN among gNBs, which are positioned on geostationary (GEO) satellites or which communicate with the UE via a GEO satellite, only. Additionally or alternatively, the disclosed timing pattern sharing may be enabled in a NTN among gNBs, which are positioned satellites in a low earth orbit (LEO) or which communicate with the UE via a LEO satellite, only. In other words, the described sharing of timing patterns may be enabled among the same type of gNBs, namely among GEO only and/or among LEO only. Alternatively, the described timing pattern sharing may be enabled among different types of gNBs, that is, among GEO, LEO and terrestrial gNBs.

According to the embodiment, the timing pattern enabling continuing communication with a source gNB may be applied in a case where a large RTD occurs, for instance, in communication with or over a satellite in a NTN.

In the following, implementation examples of including a timing pattern indicator in a measurement report, a handover request, a handover acknowledgement or a handover command are described.

For instance, as illustrated in Table 2, the information element IE may include information on the active timing pattern as an integer indicating the first duration of the first period A and a second duration of the second period B. For instance, the integer may take values from 1 to 100 ms. However, the present disclosure is not limited thereto, and the integers for first and second periods A and B may indicate time durations within another range.

**Table 2: Example of a timing pattern information element**

| **IE/Group Name** | |
|---|---|
| Active Timing Pattern | Period A: Integer (1...100ms) |
| | Period B: Integer (1...100ms) |

Alternatively, as illustrated in Table 3, the information element IE may include information on the active timing patters as a bitmap indicating the first duration of the first periods A and a second bitmap indicating the second duration of the second period B. The bitmap may be a bitmap of 1 to 16 bits, for example.

**Table 3: Example of a timing pattern information element**

| **IE/Group Name** | |
|---|---|
| Active Timing Pattern | Period A: bitmap (1 to 16 bit) |
| | Period B: bitmap (1 to 16 bit) |

In the present disclosure, the timing pattern may be also referred to as active timing pattern. Further, a source base station or source gNB may be also referred to as a serving base station or a serving gNB, respectively.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

As described above, provided are devices and methods enabling an improved handover process of a transceiver device from first base station serving as a source base station and a second base station serving as a target base station.

Provided is a transceiver device, comprising a transceiver, which in operation, receives a timing pattern indicator indicating a timing pattern including a first duration of a first period and a second duration of a second period; and circuitry, which in operation, sets first periods of the first duration and second periods of the second duration in an alternating manner according to the timing pattern, wherein the transceiver, in operation, performs communication with a first base station during the first periods, and performs communication with a second base station according to a random-access procedure during the second periods.

In some embodiments, the circuitry, in operation, starts the initial first period when the timing pattern indicator is received.

In some embodiments, the circuitry, in operation, terminates the first and/or second periods after the random-access procedure has been successfully completed.

In some embodiments, the first base station serves as a serving base station and the second base station serves as a target base station in a handover process.

In some embodiments, the circuitry, in operation, determines a first timing pattern; and the transceiver, in operation, transmits a first timing pattern indicator indicating the first timing pattern to the first base station.

In some embodiments, the first duration and the second duration are different from each other.

For instance, the first duration is longer than the second duration.

For instance, the first duration is shorter than the first duration.

In some embodiments, the first duration and the second duration are equal to each other.

In some embodiments, the first duration and the second duration indicate durations, which are set in accordance with a delay sensitivity of traffic.

In other words, the first and second durations may be set according to a level of delay sensitivity of traffic.

For instance, the first and second durations may be set according to a level of delay sensitivity of traffic between the transceiver device and the first base station. Similarly, the first and second durations may be set according to a level of delay sensitivity of traffic between the transceiver device and the second base station. Similarly, the first and second durations may be set according to a level of delay sensitivity of traffic between the transceiver device and the first base station and a level of delay sensitivity of traffic between the transceiver device and the second base station.

For instance, the first and second durations may be set shorter the higher a level of delay sensitivity of traffic. Similarly, for instance, the first and second durations may be set longer the lower a level of delay sensitivity of traffic is.

In some embodiments, the circuitry, in operation, starts the first and second periods by initiating respective timers with runtimes equal to the first and second durations.

In some embodiments, the circuitry, in operation, sets the first and second periods according to the timing pattern separately for uplink and downlink data transmission, wherein a temporal offset is applied between the timing patterns for uplink and downlink data transmission.

In some embodiments, a discontinuous reception, DRX, function is operated by the transceiver device for communication with the first base station; and active times of a DRX cycle are included in the first periods.

For example, an active time of the DRX cycle may be set using a dedicated timer.

For instance, the active time of the DRX cycle is not extended so as to overlap with a second period.

For instance, the active time of the DRX cycle may be stopped when the second period starts and continued in the subsequent first period.

Provided is a base station, comprising circuitry, which in operation, determines a timing pattern including a first duration of a first period and a second duration of a second period; and the transceiver, in operation, transmits a timing pattern indicator indicating the timing pattern to a transceiver device, and performs communication with the transceiver device during the first periods.

For instance, the base station serves as a source base station in a handover process for the transceiver device to another base station serving as the target base station.

In some embodiments, the circuitry, in operation, determines a first timing pattern; the transceiver, in operation, transmits a first timing pattern indicator indicating the first timing pattern to a second base station, and receives a second timing pattern indicator indicating a modified timing pattern from the second base station; and the circuitry, in operation, determines the timing pattern according to the modified timing pattern.

In some embodiments, the transceiver, in operation, receives a first timing pattern indicator indicating a first timing pattern from the transceiver device, transmits a second timing pattern indicator indicating the first timing pattern to a second base station, and receives a third timing indicator indicating a modified timing pattern from the second base station; and the circuitry, in operation, determines the timing pattern according to the modified timing pattern.

In some embodiments, the first duration and the second duration are different from each other.

For instance, the first duration is longer than the second duration.

For instance, the first duration is shorter than the first duration.

In some embodiments, the first duration and the second duration are equal to each other.

In some embodiments, the first duration and the second duration indicate durations, which are set in accordance with a delay sensitivity of traffic.

In other words, the first and second durations may be set according to a level of delay sensitivity of traffic.

For instance, the first and second durations may be set according to a level of delay sensitivity of traffic between the transceiver device and the first base station. Similarly, the first and second durations may be set according to a level of delay sensitivity of traffic between the transceiver device and the second base station. Similarly, the first and second durations may be set according to a level of delay sensitivity of traffic between the transceiver device and the first base station and a level of delay sensitivity of traffic between the transceiver device and the second base station.

For instance, the first and second durations may be set shorter the higher a level of delay sensitivity of traffic. Similarly, for instance, the first and second durations may be set longer the lower a level of delay sensitivity of traffic is.

In some embodiments, a discontinuous reception, DRX, function is operated for communication with the transceiver device; and active times of a DRX cycle are included in the first periods.

Provided is a base station, comprising circuitry, which in operation, determines a timing pattern including a first duration of a first period and a second duration of a second period; and a transceiver, which in operation, transmits a timing pattern indicator indicating the timing pattern to a first base station, and performs communication with a transceiver device according to a random-access procedure during the second periods.

In some embodiments, the transceiver, in operation, receives a first timing pattern indicator indicating a first timing pattern; the circuitry, in operation, modifies the first timing pattern so as to determine the timing pattern.

In some embodiments, the first duration and the second duration are different from each other.

For instance, the first duration is longer than the second duration.

For instance, the first duration is shorter than the first duration.

In some embodiments, the first duration and the second duration are equal to each other.

In some embodiments, the first duration and the second duration indicate durations, which are set in accordance with a delay sensitivity of traffic.

In other words, the first and second durations may be set according to a level of delay sensitivity of traffic.

For instance, the first and second durations may be set according to a level of delay sensitivity of traffic between the transceiver device and the first base station. Similarly, the first and second durations may be set according to a level of delay sensitivity of traffic between the transceiver device and the second base station. Similarly, the first and second durations may be set according to a level of delay sensitivity of traffic between the transceiver device and the first base station and a level of delay sensitivity of traffic between the transceiver device and the second base station.

For instance, the first and second durations may be set shorter the higher a level of delay sensitivity of traffic. Similarly, for instance, the first and second durations may be set longer the lower a level of delay sensitivity of traffic is.

Provided is a method, comprising receiving a timing pattern indicator indicating a timing pattern including a first duration of a first period and a second duration of a second period; setting first periods of the first duration and second periods of the second duration in an alternating manner according to the timing pattern; and performing communication with a first base during the first periods and performing communication with a second base station according to a random-access procedure during the second periods.

For example, the method is a method for transceiver device in a handover process from the first base station serving as a source base station of the handover process and the second base station serving as a target base station in the handover process.

In some embodiments, the method comprises starting the initial first period when the timing pattern indicator is received.

In some embodiments, the first and/or second periods are terminated after the random-access procedure has been successfully completed.

In some embodiments, the first duration and the second duration are different from each other.

For instance, the first duration is longer than the second duration.

For instance, the first duration is shorter than the first duration.

In some embodiments, the first duration and the second duration are equal to each other.

In some embodiments, the first duration and the second duration indicate durations, which are set in accordance with a delay sensitivity of traffic.

In other words, the first and second durations may be set according to a level of delay sensitivity of traffic.

For instance, the first and second durations may be set according to a level of delay sensitivity of traffic between the transceiver device and the first base station. Similarly, the first and second durations may be set according to a level of delay sensitivity of traffic between the transceiver device and the second base station. Similarly, the first and second durations may be set according to a level of delay sensitivity of traffic between the transceiver device and the first base station and a level of delay sensitivity of traffic between the transceiver device and the second base station.

For instance, the first and second durations may be set shorter the higher a level of delay sensitivity of traffic. Similarly, for instance, the first and second durations may be set longer the lower a level of delay sensitivity of traffic is.

In some embodiments, the method comprises starting the first and second periods by initiating respective timers with runtimes equal to the first and second durations.

In some embodiments, the method comprises setting the first and second periods according to the timing pattern separately for uplink and downlink data transmission, wherein a temporal offset is applied between the timing patterns for uplink and downlink data transmission.

In some embodiments, a discontinuous reception, DRX, function is operated for a transceiver device for communication with the first base station; and active times of a DRX cycle are included in the first periods.

For example, an active time of the DRX cycle may be set using a dedicated timer.

For instance, the active time of the DRX cycle is not extended so as to overlap with a second period.

For instance, the active time of the DRX cycle may be stopped when the second period starts and continued in the subsequent first period.

Provided is a method, comprising: determining a timing pattern including a first duration of a first period and a second duration of a second period; transmitting a timing pattern indicator indicating the timing pattern to a transceiver device; and performing communication with the transceiver device during the first periods.

For instance, the method is a method for first base station serving as a source base station in a handover process for the transceiver device to a second base station serving as a target base station in the handover process.

In some embodiment, the method comprises determining a first timing pattern; transmitting a first timing pattern indicator indicating the first timing pattern to a second base station; receiving a second timing pattern indicator indicating a modified timing pattern from the second base station, wherein the timing pattern is determined according to the modified timing pattern.

In some embodiments, the method comprises receiving a first timing pattern indicator indicating a first timing pattern from the transceiver device, transmitting a second timing pattern indicator indicating the first timing pattern to a second base station; receiving a third timing indicator indicating a modified timing pattern from the second base station, wherein the timing pattern is determined according to the modified timing pattern.

In some embodiments, the first duration and the second duration are different from each other.

For instance, the first duration is longer than the second duration.

For instance, the first duration is shorter than the first duration.

In some embodiments, the first duration and the second duration are equal to each other.

In some embodiments, the first duration and the second duration indicate durations, which are set in accordance with a delay sensitivity of traffic.

In other words, the first and second durations may be set according to a level of delay sensitivity of traffic.

For instance, the first and second durations may be set according to a level of delay sensitivity of traffic between the transceiver device and the first base station. Similarly, the first and second durations may be set according to a level of delay sensitivity of traffic between the transceiver device and the second base station. Similarly, the first and second durations may be set according to a level of delay sensitivity of traffic between the transceiver device and the first base station and a level of delay sensitivity of traffic between the transceiver device and the second base station.

For instance, the first and second durations may be set shorter the higher a level of delay sensitivity of traffic. Similarly, for instance, the first and second durations may be set longer the lower a level of delay sensitivity of traffic is.

Provided is a method, comprising determining a timing pattern including a first duration of a first period and a second duration of a second period; transmitting a timing pattern indicator indicating the timing pattern to a first base station; and performing communication with a transceiver device according to a random-access procedure during the second periods.

For instance, the method is a method for second base station serving as a target base station in a handover process for the transceiver device from a first base station serving as a source base station in the handover process.

In come embodiments, the method comprises receiving a first timing pattern indicator indicating a first timing pattern; and modifying the first timing pattern so as to determine the timing pattern.

In some embodiments, the first duration and the second duration are different from each other.

For instance, the first duration is longer than the second duration.

For instance, the first duration is shorter than the first duration.

In some embodiments, the first duration and the second duration are equal to each other.

In some embodiments, the first duration and the second duration indicate durations, which are set in accordance with a delay sensitivity of traffic.

In other words, the first and second durations may be set according to a level of delay sensitivity of traffic.

For instance, the first and second durations may be set according to a level of delay sensitivity of traffic between the transceiver device and the first base station. Similarly, the first and second durations may be set according to a level of delay sensitivity of traffic between the transceiver device and the second base station. Similarly, the first and second durations may be set according to a level of delay sensitivity of traffic between the transceiver device and the first base station and a level of delay sensitivity of traffic between the transceiver device and the second base station.

For instance, the first and second durations may be set shorter the higher a level of delay sensitivity of traffic. Similarly, for instance, the first and second durations may be set longer the lower a level of delay sensitivity of traffic is.

## Claims

1. A transceiver device, comprising
a transceiver, which in operation, receives a timing pattern indicator indicating a timing pattern including a first duration of a first period and a second duration of a second period; and
circuitry, which in operation, sets first periods of the first duration and second periods of the second duration in an alternating manner according to the timing pattern, wherein
the transceiver, in operation,
performs communication with a first base station during the first periods, and
performs communication with a second base station according to a random-access procedure during the second periods.

2. The transceiver device according to claim 1, wherein
the circuitry, in operation, starts the initial first period when the timing pattern indicator is received.

3. The transceiver device according to of claim 1 or 2, wherein
the circuitry, in operation, terminates the first and/or second periods after the random-access procedure has been successfully completed.

4. The transceiver device according to any one of claims 1 to 3, wherein
the first base station serves as a serving base station and the second base station serves as a target base station in a handover process.

5. The transceiver device according to any one of claims 1 to 4, wherein
the circuitry, in operation, determines a first timing pattern; and
the transceiver, in operation, transmits a first timing pattern indicator indicating the first timing pattern to the first base station.

6. The transceiver device according to any one of claims 1 to 5, wherein
the first duration and the second duration are different from each other.

7. The transceiver device according to any one of claims 1 to 6, wherein
the first duration and the second duration indicate durations, which are set in accordance with a delay sensitivity of traffic.

8. The transceiver device according to any one of claims 1 to 7, wherein
the circuitry, in operation, starts the first and second periods by initiating respective timers with runtimes equal to the first and second durations.

9. The transceiver device according to any one of claims 1 to 8, wherein
the circuitry, in operation, sets the first and second periods according to the timing pattern separately for uplink and downlink data transmission, wherein a temporal offset is applied between the timing patterns for uplink and downlink data transmission.

10. The transceiver device according to any one of claims 1 to 9, wherein
a discontinuous reception, DRX, function is operated by the transceiver device for communication with the first base station; and
active times of a DRX cycle are included in the first periods.

11. A base station, comprising
circuitry, which in operation, determines a timing pattern including a first duration of a first period and a second duration of a second period; and
a transceiver, which in operation,
transmits a timing pattern indicator indicating the timing pattern to a transceiver device, and
performs communication with the transceiver device during the first periods.

12. The base station according to claim 11, wherein
the circuitry, in operation, determines a first timing pattern;
the transceiver, in operation,
transmits a first timing pattern indicator indicating the first timing pattern to a second base station, and
receives a second timing pattern indicator indicating a modified timing pattern from the second base station; and
the circuitry, in operation, determines the timing pattern according to the modified timing pattern.

13. The base station according to claim 11, wherein
the transceiver, in operation,
receives a first timing pattern indicator indicating a first timing pattern from the transceiver device,
transmits a second timing pattern indicator indicating the first timing pattern to a second base station, and
receives a third timing indicator indicating a modified timing pattern from the second base station; and
the circuitry, in operation, determines the timing pattern according to the modified timing pattern.

14. A base station, comprising
circuitry, which in operation, determines a timing pattern including a first duration of a first period and a second duration of a second period; and
a transceiver, which in operation,
transmits a timing pattern indicator indicating the timing pattern to a first base station, and
performs communication with a transceiver device according to a random-access procedure during the second periods.

15. A method, comprising
receiving a timing pattern indicator indicating a timing pattern including a first duration of a first period and a second duration of a second period;
setting first periods of the first duration and second periods of the second duration in an alternating manner according to the timing pattern; and
performing communication with a first base during the first periods and performing communication with a second base station according to a random-access procedure during the second periods.
